Europäisches Patentamt

European Patent Office

Office européen des brevets

(19)

(11) Veröffentlichungsnummer: **0 199 390**
**A1**

## (12)　EUROPÄISCHE PATENTANMELDUNG

(21) Anmeldenummer: 86200468.6

(22) Anmeldetag: **21.03.86**

(51) Int. Cl.4: **A61C 1/08**

(30) Priorität: **27.03.85 FR 8505016**

(43) Veröffentlichungstag der Anmeldung:
**29.10.86 Patentblatt 86/44**

(84) Benannte Vertragsstaaten:
**AT CH DE FR GB IT LI SE**

(71) Anmelder: **MICRO-MEGA S.A.**
**5-12, rue du Tunnel**
**F-25006 Besancon(FR)**

(72) Erfinder: **Boinot, Jean-Claude**
**Chaudefontaine**
**F-25640 Roulans(FR)**

(74) Vertreter: **Jörchel, Dietrich R.A. et al**
**c/o BUGNION S.A. Conseils en Propriété**
**Industrielle 10, route de Florissant Case**
**postale 375**
**CH-1211 Genève 12 Champel(CH)**

(54) **Zahnärtztliches Winkelstück mit einer Einrichtung zur Beleuchtung der Behandlungsstelle.**

(57) Das Winkelstück ist mit wenigstens einer im Winkelstückkopf (27a) auswechselbar angeordneten Miniatur-Glühlampe (1) ausgerüstet und hat eine Kopfteil (27), das abnehmbar an einer Hülse (15) befestigt ist. Eine in dieser Hülse angeordnete Federlamelle (9), die einen elektrischen Kontakt bildet, erstreckt sich axial im Bereich der Verbindungsstelle zwischen Kopfteil (27) und Hülse (15) und befindet sich normalerweise im radialen Abstand von einem festen elektrischen Kontakt in Form eines metallischen Ringes (5) am hinteren Ende des Kopfteils (27). Dieser Ring (5) sitzt auf einem Träger (6), der ein Lager für die im Kopfteil (27) montierte Welle (28) bildet. Ein elektrischer Druckknopf-Schalter (7) ist in einer Oeffnung des Mantels der Hülse (15) radial verschiebbar und presst die Federlamelle (9) beim Eindrücken gegen den festen Kontakt (5), wodurch der Stromkreis für die Glühbirne (1) geschlossen wird. Beim Loslassen des Druckknopfes hebt die gleichzeitig als Rückstellfeder wirkende Federlamelle (9) vom festen Kontakt (5) ab und öffnet den Schalter. Auf diese Weise lässt sich die Glühbirne (1) leicht bei Bedarf mit den Fingern der das Winkelstück haltenden Hand einschalten.

Fig. 1a

Zahnaerztliches Winkelstück mit einer Einrichtung zur Beleuchtung der Behandlungsstelle

Die Erfindung bezieht sich auf ein zahnärztliches Winkelstück mit einer Einrichtung zur Beleuchtung der Behandlungsstelle gemäss dem Oberbegriff des Patentanspruchs 1.

Es ist bereits bekannt, zahnärztliche Handstücke mit einer Beleuchtungseinrichtung auszurüsten, deren Licht auf die Behandlungsstelle gerichtet ist und damit die Arbeit des Zahnarztes erleichtert.

In den europäischen Patentanmeldungen mit den Veröffentlichungsnummern 34 237 und 143 985 werden derartige zahnärztliche Handstücke beschrieben, in denen optische Fasern als Lichtleiter installiert sind, welche die verschiedenen Teile des Handstücks durchqueren und deren vordere, das Licht emittierende Enden in der Nähe des Handstückkopfs aus dem Handstückkörper austreten. Es ist jedoch schwierig, diese Enden der Lichtleiter in geeigneter Weise in Richtung auf die Behandlungsstelle zu orientieren, da sie wegen ihrer Brüchigkeit nur schwach gebogen werden können und der zulässige Biegungswinkel im allgemeinen nicht ausreicht, um die das Licht emittierenden Stirnflächen genau auf die Behandlungsstelle zu richten. Ausserdem erfordert eine derartige Anordnung, dass die Lichtleiter durchgehend, ohne Unterbrechung, bis zur hinteren Lichtquelle, im allgemeinen einer Halogenlampe, verlaufen, da jede Unterbrechung wenigstens 30% an Lichtintensität absorbieren würde. Die Notwendigkeit von durchgehend im Handstück verlaufenden Lichtleitern erschwert den Aufbau eines Winkelstücks mit leicht auswechselbarem Kopfteil.

Es sind auch bereits zahnärztliche Handstücke bekannt, bei denen eine Lichtquelle aussen am Handstückkörper befestigt werden kann (DE-AS 1.032.882 und 1.065.566); diese Anordnungen sind jedoch unpraktisch und behindern die Arbeit des Zahnarztes.

Der Erfindung liegt die Aufgabe zugrunde, ein zahnärztliches Winkelstück zu schaffen, in welchem eine Lichtquelle in Form wenigstens einer Miniaturglühbirne eingebaut ist und die elektrischen Anschlussleitungen auf einfache Weise so angeordnet sind, dass der Aufbau des Winkelstücks nicht kompliziert wird und der Zahnarzt das an der Hülse befestigte Kopfteil leicht und bequem auswechseln kann, wobei beim Zusammensetzen beider Teile eine zuverlässige elektrische Verbindung der betreffenden Anschlussleitungen für die Lichtquelle gewährleistet ist. Ausserdem soll die Anordnung so getroffen sein, dass der Zahnarzt während der Behandlung die Lichtquelle nach Bedarf leicht ein-und ausschalten kann.

Diese Aufgabe wird erfindungsgemäss durch die im Patentanspruch 1 angegebenen Merkmale gelöst.

Das Winkelstück nach der Erfindung zeichnet sich durch eine einfache Fertigung und Montage seiner Teile und einen zuverlässigen elektrischen Anschluss der Miniaturglühbirne aus. Ausserdem kann der Zahnarzt diese Glühbirne auf einfache Weise mit den Fingern der das Winkelstück haltenten Hand einschalten, während der Speisestromkreis automatisch beim Loslassen des Druck knopfes und damit beim Ablegen des Winkelstücks unterbrochen wird.

Zweckmässige Ausgestaltungen des Winkelstücks nach der Erfindung ergeben sich aus den abhängigen Patentansprüchen.

Die Erfindung wird an Hand der Zeichnung an einem Ausführungsbeispiel näher erläutert. Es zeigen :

Fig. 1a den vorderen Teil eines Winkelstücks, im Längsschnitt,

Fig. 1b den hinteren Teil dieses Winkelstücks, im Längsschnitt, und

Fig. 2 eine Draufsicht auf die rückwärtige Fläche des Winkelstücks im Sinne des Pfeils II nach Fig. 1b.

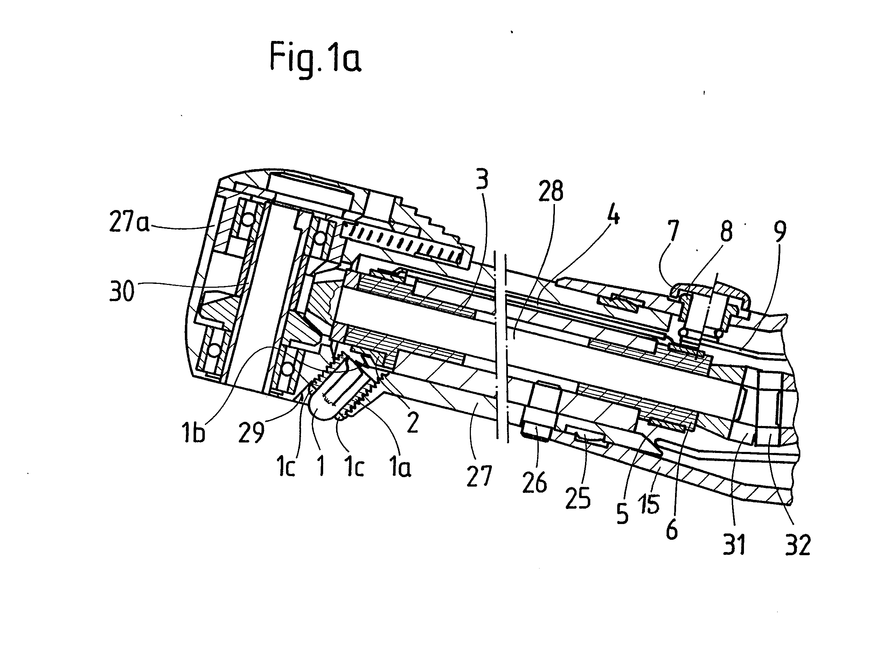

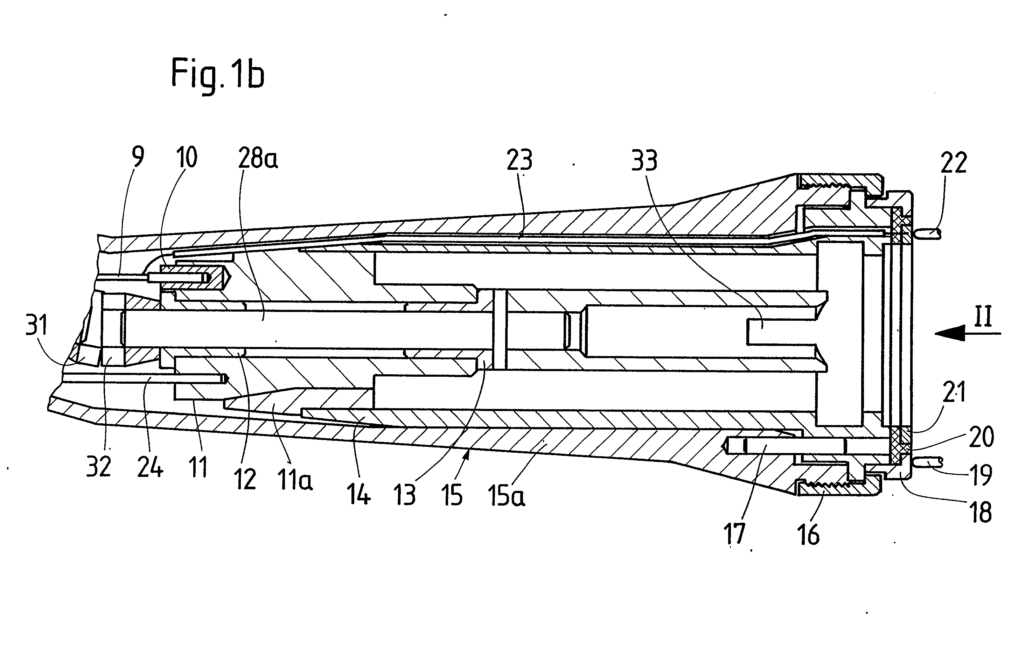

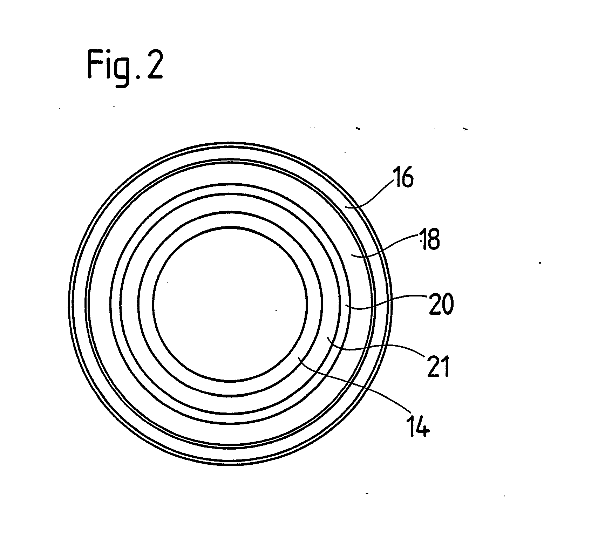

Nach den Figuren 1 und 2 besteht das Winkelstück aus einem Kopfteil 27 mit dem Winkelstückkopf 27a, in welchem ein nicht dargestelltes Behandlungsinstrument mittels einer Befestigungseinrichtung 30 eingesetzt werden kann, und aus einer Hülse 15, an welcher das Kopfteil 27 auswechselbar befestigt werden kann. Das Behandlungsinstrument wird in bekannter Weise durch eine drehbar im Kopfteil 27 gelagerte Welle 28 angetrieben, die an ihrem hinteren Ende mit einem Ritzel 31 versehen ist. In der Hülse 15 ist eine weitere Welle 28a drehbar gelagert, die an ihrem vorderen Ende ein mit dem Ritzel 31 der erst erwähnten Welle 28 kämmendes Ritzel 32 trägt. Die Welle 28a wird im betrachteten Beispiel durch einen nicht dargestellten Kleinmotor angetrieben, der in einem Anschlussteil untergebracht ist, welches abnehmbar am hinteren Ende der Hülse 15 befestigt werden kann. In diesem Falle ragt eine am vorderen Ende des Kleinmotors vorstehende rohrförmige Buchse ins Innere der Hülse 15 hinein, und die Welle des Kleinmotors greift in die am hinteren Ende der Welle 28a angeformte Gabel 33 ein, so dass beide Wellen drehfest miteinander gekuppelt sind.

Das Kopfteil 27 sitzt im äusseren Hülsenteil 15a der Hülse 15, und wird durch einen Sicherungsring 25 fest an der Hülse 15 gehalten. Die relative Lage beider Teile ist dabei durch einen am Kopfteil 27 angebrachten Stift 26 festgelegt. Im Körper des Winkelstückkopfs 27a ist eine Ausnehmung 29 für eine Miniaturglühbirne 1 vorgesehen, die in einer leitenden Fassung 1a durch Kleben oder auf andere Weise befestigt ist. Diese Fassung 1a ist in den Körper des Winkelstückkopfs 27a eingeschraubt und auf ihrer äusseren Stirnfläche mit zwei Schlitzen 1c versehen, so dass sie einfach mit Hilfe eines geeigneten Schraubenziehers eingeschraubt beziehungsweise ausgeschraubt werden kann. Auf diese Weise lässt sich die Glühbirne 1 leicht auswechseln.

Die Neigung der Ausnehmung 29 in Bezug auf die Achse des Instruments ist so getroffen, dass das Licht der eingesetzten Glühbirne 1 auf das äussere Ende des Instruments, also auf die Behandlungsstelle gerichtet ist. Der Umfang des Glühbirnensockels, welcher den Masse-Pol bildet, ist, beispielsweise durch Löten, mit der Fassung 1a in Kontakt, welche ihrerseits mit dem Körper des aus Metall gefertigten und die Masse-Leitung bildenden Körpers des Kopfteils 27 in leitender Verbindung steht. Der den anderen Pol bildende Mittelkontakt 1b des Glühlampensockels liegt an einem metallischen Ring 2 an, der auf dem Umfang eines isolierenden Trägers 3 befestigt ist, welcher das vordere Lager der Welle 28 bildet oder zum Halten eines derartigen Lagers dient. Dieser metallische Ring 2 ist durch einen isolierten Draht 4 mit einem weiteren metallischen Ring 5 verbunden, welcher auf einem isolierenden Träger 6 befestigt ist; dieser Träger 6 bildet das hintere Lager der Welle 28 oder aber dient zum Halten eines derartigen Lagers. Die beiden Enden des Drahtes 4 sind an den Ringen 2 und 5 angelötet.

Der hintere metalische Ring 5 kann, wenn das Kopfteil 27 mit der Hülse 15 verbunden ist, mit einem elastischen Kontakt in Form einer Federlamelle 9 verbunden werden, deren rückwärtiges Ende im Innern der Hülse 15 in einem isolierenden Träger 10 sitzt, welcher seinerseits in den elektrisch leitenden Körper eines inneren Hülsenteils 11 der Hülse 15 eingepresst ist. Diese Federlamelle 9 erstreckt sich axial innerhalb der Hülse 15 und im Bereich ihrer Verbindung mit dem Kopfteil 27 und ist derart angeordnet, dass sich ihr vorderes Ende im kleinen radialen Abstand vom Ring 5 befindet. Ein durch einen Druckknopf gebildeter Schalter 7 durchsetzt eine Oeffnung im äusseren Hülsenteil 15a der Hülse 15 im Bereich des vorderen Endes der Federlamelle 9. Dieser Druckknopf ist radial in einer Buchse 8 verschiebbar, die in die erwähnte Oeffnung des äusseren Hülsenteils 15a eingepresst ist, und wird normalerweise durch die elastische Kraft der Federlamelle 9 in seinen angehobenen Ruhezustand gedrückt, in welchem die Federlamelle 9, wie in Fig. 1a für die rechte Hälfte des Schalters 7 gezeigt, vom metallischen Ring 5 abgehoben und damit der Stromkreis für die Glühbirne 1 unterbrochen ist. Die Federlamelle 9 fungiert also nicht nur als elektrischer Leiter, sondern auch als Rückstellfeder für den Schalter 7. Der -Kopf des Druckknopfes überdeckt die Buchse 8, um ein Eindringen von Verunreinigungen in das Winkelstück zu verhindern.

Indem der Zahnarzt mit den Fingern seiner das Winkelstück haltenden Hand den Druckknopf eindrückt, bringt er die entsprechend gebogene Federlamelle 9 mit dem metallischen Ring 5 in Berührung, wie für die linke Hälfte der Schalter 7 gezeigt, und schaltet dadurch die Glühbirne 1 ein. Beim Loslassen des Druckknopfes wird die Glühbirne automatisch abgeschaltet. Auf diese Weise wird vermieden, dass bei Betrieb des Winkelstücks die Glühbirne ständig eingeschaltet ist und, falls eine Batteriespeisung vorgesehen ist, die Batterie unnötig entladen wird. Der Zahnarzt kann also auf einfache Weise nur bei Bedarf die Glühbirne 1 vorübergehend einschalten. Auch wird der Nachteil vermieden, dass beim Ablegen des Winkelstücks der Stromkreis geschlossen bleibt; vielmehr ist die Abschaltung der Glühbirne beim Ablegen des Winkelstücks automatisch gewährleistet. Andererseits kann jedoch ·die Glühbirne auch dann bei Bedarf eingeschaltet werden, wenn der das Instrument antreibende Motor nicht in Betrieb ist, was zur Inspektion der Behandlungsstelle sehr wichtig ist.

Die Federlamelle 9 ist elektrisch durch einen an sie angelöteten Draht 23, der von einer Isolierhülle umgeben ist und in einer auf einem inneren Hülsenteil 14 der Hülse 15 angebrachten Nut verläuft, mit einem elektrisch leitenden Schleifring 21 verbunden, der einen Teil der rückwärtigen Fläche der Hülse 15 bildet und die Hülsenachse konzentrisch umgibt.

Die Masseleitung des Glühbirnen-Stromkreises wird durch die beiden inneren Hülsenteile 11 und 14 gebildet, die aus einem leitenden Metall bestehen und innerhalb der Hülse 15 montiert sind. Das Hülsenteil 11 ist in das Hülsenteil 14 eingepresst, welches seinerseits mit schwacher Reibung im äusseren Hülsenteil 15a sitzt und durch eine hintere Mutter 16 befestigt ist, wobei ein in eine achsenparallele Oeffnung des äusseren Hülsenteils 15a eingreifender Stift 17 für eine definierte, drehfeste Verbindung beider Hülsenteile sorgt. Auf der rückwärtigen Fläche der Hülse 15 ist als Massekontakt ein weiterer Schleifring 18 in Form eines Metallrings angebracht, der auf den hinteren Bereich des Hülsenteils 14 aufgepresst ist, konzentrisch den anderen Schleifring 21 umgibt und einen isolierenden Ring 20 hält, der beide Schleifringe 18 und 21 voneinander isoliert und zur Befestigung des Schleifrings 21 dient.

Im inneren Hülsenteil 11 sind zwei Lager 12 und 13 für die Welle 28a montiert. Ausserdem ist im inneren Hülsenteil 11 ein Kanal für den Durchgang eines Kühlmittels vorgesehen, wobei dieser Kanal im betrachteten Beispiel durch einen metallischen Stopfen 11a verschlossen ist. Das äussere Hülsenteil 15a besteht beispielsweise aus einer Aluminiumlegierung.

Um eine gute elektrische Verbindung zwischen dem leitenden Körper des Kopfteils 27 und dem inneren Hülsenteil 11 der Hülse 15 zu gewährleisten, ist ein elastischer Kontakt 24 in Form eines sich axial erstreckenden leitenden Stifts vorgesehen, dessen rückwärtiges Ende im Hülsenteil 11 eingespannt ist und dessen vorderer Bereich derart abgewinkelt ist, dass er mit einer hinreichenden elastischen Vorspannung, also unter entsprechender Biegung, ständig an einer Schrägfläche des Körpers des Kopfteils 27 anliegt. Auf diese Weise wird ein einwandfreier elektrischer Kontakt gewährleistet.

Das beschriebene Winkelstück zeichnet sich durch einfache und zuverlässige elektrische Verbindungen zwischen seinen beiden Teilen aus, welche vom Zahnarzt auf einfache Weise rasch voneinander getrennt und zusammengesetzt werden können, indem das Kopfteil 27 durch einfachen Zug unter Biegung des Sicherheitsringes 25 aus der Hülse 15 herausgezogen beziehungsweise in diese Hülse 15 hineingeschoben werden kann, welche in Kombination mit verschiedenen Kopfteilen verwendbar ist. Ausserdem lässt sich die Hülse 15 durch Abschrauben der Mutter 16 zerlegen.

Das beschriebene Winkelstück ist vorzugsweise dazu eingerichtet, durch einen elektrischen oder Druckluft-Kleinmotor angetrieben zu werden. Dieser Kleinmotor ist in einem Anschlussteil untergebracht, welches am rückwärtigen Ende der Hülse befestigt werden kann und zum Anschluss des Stromkreises der Glühbirne 1 an eine Stromquelle mit zwei stiftförmigen Kontakte 19 und 22 (Fig. 1b) versehen ist, die unter der Wirkung von Federn gegen die beiden Schleifringe 18 und 21 der Hülse 15 gedrückt werden. Dadurch lässt sich das Anschlussteil mit dem Motor unter Aufrechterhaltung der elektrischen Verbindung frei gegenüber der Hülse 15 drehen. Die Stromquelle für die Glühbirne 1 kann aus vorzugsweise wieder aufladbaren Batterien bestehen, die im Anschlussteil untergebracht und deren Pole mit den stiftförmigen Kontakten 19 und 22 elektrisch verbunden sind. Andererseits kann die Glühbirne 1 auch von einer äusseren Stromquelle gespeist werden, an welche das Winkelstück über Leitungen angeschlossen ist, welche durch das Anschlussteil und durch den Versorgungs schlauch verlaufen, in welchem auch die Versorgungsleitungen für den Kleinmotor untergebracht sind.

Das Winkelstück kann auch für einen herkömmlichen Antrieb durch einen äusseren Motor mit Hilfe eines Riemen-und Laufrollensystems eingerichtet sein; in diesem Falle enthält das die stiftförmigen Kontakte 19 und 22 aufweisende Anschlussteil die zur Uebertragung der Bewegung dienenden Teile und die Batterie.

## Ansprüche

1. Zahnärztliches Winkelstück mit einer Einrichtung zur Beleuchtung der Behandlungsstelle in Form wenigstens einer im Kopfteil (27) angeordneten Miniaturglühbirne (1), mit einer im Kopfteil (27) drehbar gelagerten Welle (28) zum Antrieb des im Kopf (27a) einsetzbaren Behandlungsinstruments und mit einer Hülse (15), die abnehmbar am Kopfteil (27) befestigbar und an ihrem rückwärtigen Ende mit elektrischen Kontakten versehen ist, die so angeordnet sind, dass sie bei der lösbaren Befestigung eines Anschlussteils am hinteren Hülsenende mit an diesem Anschlussteil vorgesehenen Kontakten elektrisch verbunden sind, um die Glühbirne (1) vom Anschlussteil aus mit Strom speisen zu können, dadurch gekennzeichnet, dass die im Kopfteil (27) verlaufende elektrische Anschlussleitung für den Mittelkontakt (1b) der Glühbirne (1) zwei metallische Ringe (2, 5) einschliesst, welche im axialen Abstand voneinander angeordnet und je auf einem isolierenden Träger (3, 6) montiert sind, welche Lager für die erwähnte Welle (28) bilden oder diese Lager halten, dass der Mittelkontakt (1b) der Glühbirne (1) am vorderen metallischen Ring (2) anliegt, dass im Innern der Hülse (15) eine einen elektrischen Kontakt bildende, elastische Lamelle (9) befestigt ist und sich axial im Bereich der Verbindungsstelle zwischen dieser Hülse (15) und dem Kopfteil (27) erstreckt, wobei sich diese elastische Lamelle (9) bei am Kopfteil befestigter Hülse im Abstand von dem hinteren metallischen Ring (5) befindet, und dass an der Hülse (15) im Bereich der elastischen Lamelle (9) ein Schalter (7) in Form eines Druckknopfes montiert ist, bei dessen Betätigung die elastische Lamelle (9) zwecks Schliessens des Speisestromkreises der Glühbirne (1) gegen den erwähnten hinteren metallischen Ring (5) gedrückt wird, wobei diese elastische Lamelle (9) gleichzeitig eine Rückstellfeder für den Druckknopf bildet.

2. Zahnärztliches Winkelstück nach Anspruch 1, dadurch gekennzeichnet, dass die am rückwärtigen Ende der Hülse (15) vorgesehenen elektrischen Kontakte getrennte Schleifringe (18, 21) sind.

3. Zahnärztliches Winkelstück nach Anspruch 1 oder 2, dadurch gekennzeichnet, dass die Anschlussleitung des Massekontakts der Glühbirne - (1) metallisch leitende Bestandteile des Kopfteils (27) und metallisch leitende Bestandteile (11, 14) der Hülse (15) einschliesst und dass bei am Kopfteil (27) befestigter Hülse (15) die elektrische Verbindung durch einen elastischen Kontakt (24) gebildet wird, der in einem der beiden miteinander befestigten Teile montiert ist, sich axial im Bereich der Verbindungsstelle erstreckt und unter elastischem Druck auf einem elektrisch leitenden Bestandteil des anderen Teils aufliegt.

4. Zahnärztliches Winkelstück nach einem der Ansprüche 1 bis 3, dadurch gekennzeichnet, dass die Glühbirne (1) in einer metallischen Fassung (1a) sitzt, welche ihrerseits auswechselbar in den Körper des Kopfes (27a) eingeschraubt ist und die Verbindung mit der Masseleitung bildet.

5. Zahnärztliches Winkelstück nach Anspruch 4, dadurch gekennzeichnet, dass die Fassung (1a) mit einem Spalt (1c) zum Einführen eines Schraubenziehers versehen ist.

# Fig.1a

0 199 390

Fig.1b

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 123 034 (PESTEL) <br> * Spalte 1, Zeilen 22-33; figur 8 * | 1,2 | A 61 C 1/08 |
| Y | FR-A- 673 955 (T. RHEIN) <br> * Seite 1, Zeilen 35-43; Figur 1 * | 1,2 | |
| A,D | DE-B-1 065 566 (E. FRANK) <br> * Spalte 2, Zeilen 43-50; Figur 1 * | 1 | |
| A | DE-A-3 322 923 (WALDEMAR WEIMAR) <br> * Figur 2 * | 3,4 | |
| A,D | DE-B-1 032 882 (A. MAIER) <br> * Figuren 1,2 * | 1 | RECHERCHIERTE SACHGEBIETE (Int. Cl.4) <br><br> A 61 C |
| A,D | EP-A-0 034 237 (D. MOSIMANN) <br> * Figuren 1-4 * | 1 | |
| A,D | EP-A-0 143 985 (SIEMENS) <br> * Seite 8, Zeilen 20-36; Figur 12 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 08-07-1986 | EHRSAM F.J.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82